Europäisches Patentamt

European Patent Office

Office européen des brevets

(19)

(11) Publication number: **0 056 838**
**A1**

(12) # EUROPEAN PATENT APPLICATION

(21) Application number: **81107201.6**

(22) Date of filing: **12.09.81**

(51) Int. Cl.³: **F 02 M 31/18**

(30) Priority: **19.01.81 US 226125**

(43) Date of publication of application:
**04.08.82 Bulletin 82/31**

(84) Designated Contracting States:
**AT BE CH DE FR GB IT LI LU NL SE**

(71) Applicant: **Davison, Richard Read**
**303 Crescent Drive**
**Bryan Texas 77801(US)**

(84) Designated Contracting States:
**AT BE CH DE FR GB IT LI LU NL SE**

(71) Applicant: **Harris, William Birch**
**Route 3 Box 293A**
**Bryan Texas 77801(US)**

(84) Designated Contracting States:
**AT BE CH DE FR GB IT LI LU NL SE**

(71) Applicant: **EnDevEx Corporation**
**5311 First International Building**
**Dallas Texas 75270(US)**

(84) Designated Contracting States:
**NL**

(72) Inventor: **Davison, Richard Read**
**303 Crescent Drive**
**Bryan Texas 77801(US)**

(72) Inventor: **Harris, William Birch**
**Route 3 Box 293A**
**Bryan Texas 77801(US)**

(74) Representative: **UEXKÜLL & STOLBERG Patentanwälte**
**Beselerstrasse 4**
**D-2000 Hamburg 52(DE)**

(54) **Surface tension fuel vaporizer.**

(57) A vaporizer (10) for vaporizing liquid fuels having improved heat transfer and controls for vaporization of liquid fuels in response to varying degrees of fuel vapor demand and temperature requirements having a heat exchanger (28) formed from multiple chambers (27) having opposing surfaces (41, 42) with small but effective passages formed therebetween and the opposing surfaces being in small but effective passage relationship for sufficient length for the surface tension between a liquid fuel and the opposing surfaces of said multiple chambers (27) to spread the liquid fuel over the opposing surfaces (41, 42) of said multiple chambers (27) for maintaining said liquid fuel in relatively constant and thin liquid relationship to the opposing surfaces (41, 42) of the multiple chambers (27) of the heat exchanger (28) until the liquid fuel is vaporized; a heat delivery system for delivering heat and a heat exchanger for vaporizing the liquid fuel therein and controls for the flow of vaporized liquid fuel from the vaporizer and controls for flowing of the liquid fuel to the heat exchanger.

./...

Croydon Printing Company Ltd.

FIG. 1

TITLE MODIFIED
see front page

SURFACE TENSION BOILER

TECHNICAL FIELD

This invention relates to an improved vaporizer for vaporizing liquid fuels to produce dry vapor in a single pass and low liquid volume having improved heat transfer and controls for the vaporization of liquid fuels in response to varying degrees of fuel vapor demand and temperature requirements.

BACKGROUND ART

The prior art vaporizers have all been of a relatively large size and designed so that their application was limited by their use being compatible with design rather than their design being adapted to be compatible with the existing design of a vehicle or other existing application.

The prior art vaporizers which were small and easily adapted for mounting on vehicles tended to operate at a super heated temperature and relatively higher pressure to ensure complete vaporization of the liquid to be vaporized. Also, some prior art vaporizers developed dams at the exit of the vaporizer to prevent liquids from coming through, such as in U.S. Patent 3,990,432.

Further, prior art also provided super heated passages outside the ports of the vaporizer to further ensure vaporization would be complete or that condensation would not occur upon reaching the colder parts of the system.

Also, prior art vaporizers were not easily and readily adaptable for adding to existing vehicles without great expense in modifying the vehicle.

Many of the prior art vaporizers attempted to heat large quantities of the fuel to be vaporized, either by preheating or by having large quantities of fuel heated and ready for vaporization. Having large quantities of fuel present made the vaporization process very slow in starting up the vaporizer. In vehicles, this approach was extremely undesirable.

Also, with large quantities of fuel present, the problem of over pressuring the system was great. Operating at higher pressures was dangerous because the pressures could rapidly exceed the safe level of the vaporizers.

DISCLOSURE OF THE INVENTION

This invention is designed to provide a vaporizer which can easily be mounted on a vehicle and does not require a large space for its installation.

The vaporizer of this invention is designed to only have a very small quantity of fuel available for vaporization at any one time.

Also, the vaporizer of this invention is designed to minimize super heating of the vapor being vaporized.

Further, this vaporizer is designed to empty the vaporizer if excess pressure is generated, thus preventing over pressuring the system and maintaining a relatively constant pressure.

It is an object of this invention to provide the maximum heat transfer possible by having only very thin films of the liquid exposed to the heated surfaces and thus eliminating the poor heat transfers from having a mixture of vaporized liquid and liquid in contact with the heated surfaces.

It is also the object of this invention to produce dry, slightly super heated vapor with a single pass.

It is also an object of this invention to prevent the perculator effect which would cause liquid to be slugged through vaporizer delivering liquid which would not be vaporized to the vapor regulator.

Yet further objects of this invention will become apparent from the description which follows.

0056838

BRIEF DESCRIPTION OF DRAWINGS

FIGURE 1 is a diagrammatic drawing of the fuel vaporizer of the invention;

FIGURE 2 is a cross-sectional view of the heat exchanger and the heat chamber of one embodiment of this invention;

FIGURE 3 is a cross-sectional view of the heat exchanger and includes the manifolds for input and output of·the liquid and the vapor of this invention;

FIGURE 4 is a cross-sectional view of the heat exchanger with the rod materials therein and manifolds for input and output of the liquid and vapor of this invention;

FIGURE 5 is a hidden line view of yet another embodiment of the heat exchanger of this invention and the manifolds thereof for input and output of the liquid and vapor; and

FIGURE 6 is a cross-sectional view of a diagrammatic drawing showing the liquid and vapor phase of the liquid fuel as it is spread over the surface of the multiple chamber.

DETAILED DESCRIPTION

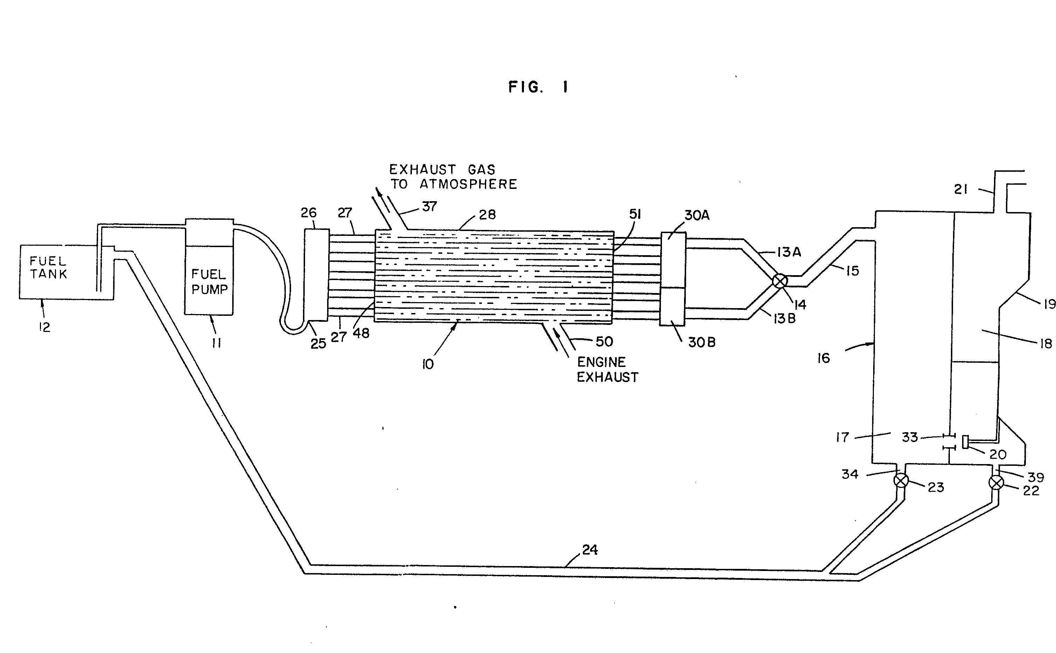

Referring now to the drawings of FIGURE 1 which show a complete vaporizer fuel system which has as its central feature a liquid fuel vaporizer 10 which is connected in fluid communication at its lowest point to a fuel pump 11, which is connected in fluid communication to a fuel tank 12 for the storage of liquid fuel. The liquid fuel vaporizer 10 is further connected in fluid communication on its other end by discharge pipe 13. In one embodiment, at least two vapor discharge pipes 13A and 13B are used but they are joined at a common point wherein a multiport valve 14 discharges into a flow way 15 for flowing the vaporized fuel to a vapor regulator 16.

The vapor regulator 16 of this embodiment is a two chamber type having a high pressure chamber 17 for receiving the discharge from the flow way 15 and a low pressure chamber 18 which, by way of a diaphram sensor 19, is functionally connected to valve 20. This functional connection to valve 20 allows the low pressure chamber 18 to open to fluid communication with the high pressure chamber 17 upon varying conditions of demand because high demand creates a low pressure to open the valve 20. A discharge port 21 connected to low pressure chamber 18 is also connected in fluid communication with a carburetor, not shown, for driving the engine which is also not shown.

The vapor regulator 16 has provided at the lowest point in the low pressure chamber 18 and the high pressure chamber 17 the valves 22 and 23 to allow the discharge of liquid fuel which may have condensed from the vaporized fuel in the respective chambers. Connected to the valves 22 and 23 is a fuel return line 24 which returns the fuel to the fuel tank 12.

The liquid fuel vaporizer 10 as shown in FIGURE 1 in this embodiment shows a liquid fuel inlet 25 in fluid communication with the fuel pump 11 which supplies fuel at a relatively constant pressure and will not generally continue to pump fuel beyond a predetermined pressure of about 7 to 8 P.S.I. The liquid fuel inlet 25 is connected to a first vaporizer manifold 26 at the lowest point in the first vaporizer manifold 26 and the vaporizer manifold 26 is further connected to a series of multiple chambers 27. Liquid fuel is thus delivered at ambient temperature by the fuel pump 11 to the first vaporizer manifold 26 to establish an even and constant pressure at ambient temperature in the first vaporizer manifold 26. The first vaporizer manifold 26 is connected to multiple chambers 27 which form a heat exchanger 28 wherein said liquid fuel is vaporized and discharged from the multiple chambers 27 into a second vaporizer manifold 30. In at least one embodiment, this second vaporizer manifold 30 is formed into at least two chambers 30A and 30B. The respective chambers 30A and 30B are then connected to the respective vapor discharge pipe 13A or 13B for discharge of the vapor to the multiport valve 14. The multiport valve 14 which is temperature activated in one embodiment and is of a standard design, which allows selective flow from either one or both vapor discharge pipes 13A and 13B into flow way 15 depending on the temperature of the vapor therein. The flowing of both vapor discharge pipes 13A and 13B through flow way 15 gives the maximum amount of vapor delivery to the vapor regulator 16. When one of the vapor discharge pipes 13A or 13B is closed off from flow by the multiport valve 14, the respective chamber either 30A or 30B builds up pressure which forces the liquid fuel out of that portion of the multiple chambers 27 which feeds the closed off chamber 30A or 30B to reduce the amount of liquid fuel exposed to the heated surfaces for vaporization. As there is only a very small amount of liquid fuel present in the liquid fuel vaporizer 10, no substantial back pressure is created when this pressure build up occurs. By the fuel being removed from the heated surfaces, the area of the heat exchanger 28 exposed to fluid is substantially reduced and the heat transfer is reduced to control the vaporization temperature. When the vapor temperature is low in flow way 15, the multiport valve 14 is opened to flow both discharge pipes 13A and 13B which allows more heat to be delivered by the heat exchanger 28.

The vapor regulator 16 of the system is connected in fluid communication with the flow way 15 for receiving the vaporized fuel. The vapor regulator 16 is, in this embodiment, a two chamber body having a valve 20 communicating therebetween. A more specific description can be seen in FIGURE 1 where the high pressure chamber 17 of the vapor regulator 16 is in fluid communication with flow way 15 to receive the vapor at relatively high pressure; thus, the high pressure chamber 17 is the high pressure side of the vapor regulator 16.

In the high pressure chamber 17, there is provided a valve port 33 for discharging the vapor therefrom to the low pressure chamber 18. Located in the lowermost point in the high pressure chamber 17 is a valve port 34 and valve 23 for removing any liquid fuel which may have condensed and collected in the respective chambers. A fuel return line 24 is provided for delivering any liquid released from the high pressure chamber 17 and the low pressure chamber 18 back to the fuel tank 12.

In the low pressure chamber 18 which is the low pressure side, is provided a valve 20 for co-acting in setting relationship with valve port 33. The valve 20 is functionally connected to a diaphram sensor 19 which senses and responds to varying changes in engine demand. Thus, when great demand is needed for vaporized fuel, the diaphram sensor 19 opens the valve 20 to flow vaporized fuel through valve port 33. In conditions of low or no demand, the diaphram sensor 19 closes down the valve 20 to limit or restrict the flow of vapor from the high pressure chamber 17. The bottom of the low pressure chamber 18 is provided with a second valve port 39 and a valve 22 for removing any liquid fuel which may condense in the low pressure chamber 18 of the vapor regulator 16. The liquid fuel passed through valve 22 is discharged into fuel return line 24 for redelivering to the fuel tank 12. The vaporized fuel in the low pressure chamber 18 is passed out through discharge port 21 for delivery to the carburetor in response to engine demand for vaporized fuel.

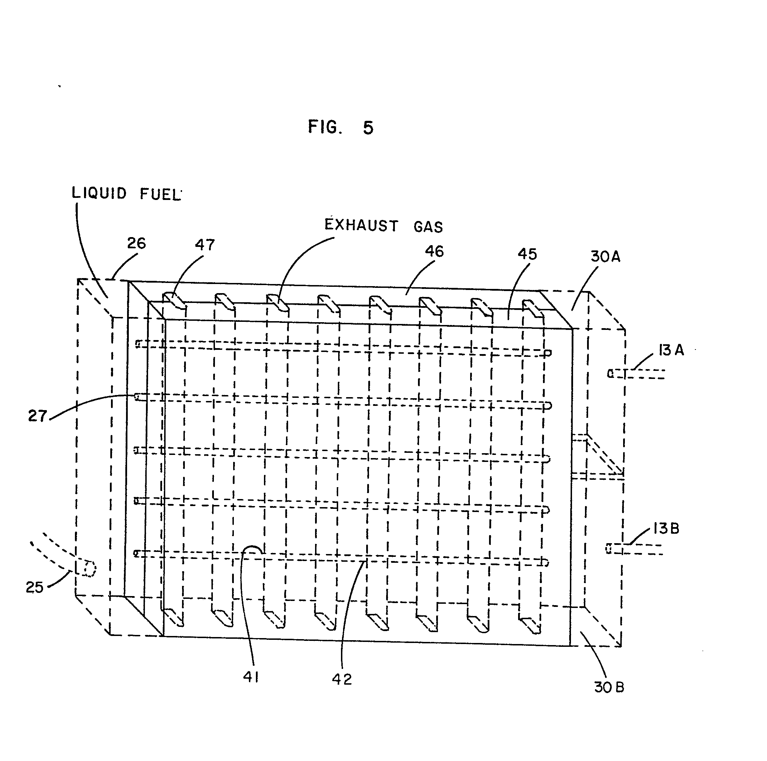

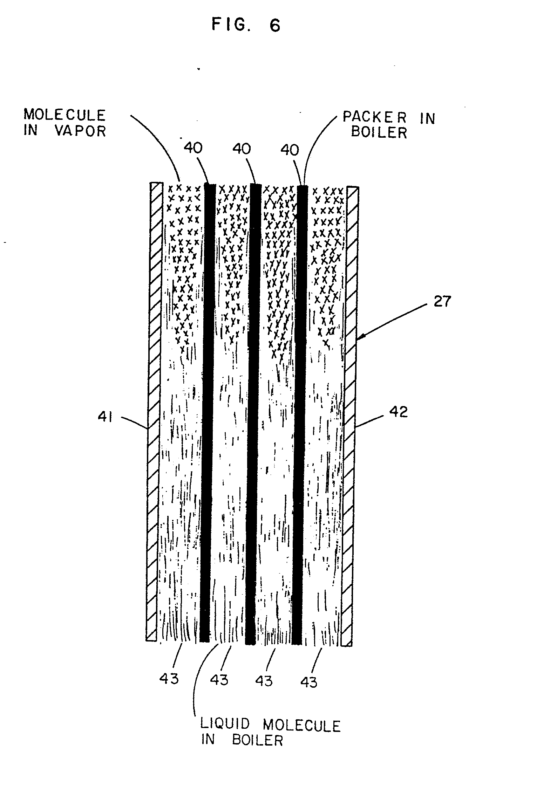

It should be understood that the multiple chambers 27 in the liquid fuel vaporizer 10 are formed by having opposing surfaces 41 and 42 for flowing liquid fuel therebetween. The opposing surfaces of the liquid fuel vaporizer 10 of this invention can be formed in many ways and still accomplish the results of this invention. For example, FIGURE 5 and FIGURE 6 show two different embodiments but in each case there is opposing surfaces 41 and 42 with passages therebetween. In FIGURE 2, FIGURE 3 and FIGURE 4, yet another form of providing the opposing surfaces 41 and 42 are shown.

It should be further understood that the distances between the opposing surfaces 41 and 42 which form the passage therebetween will vary depending on the characteristics of the liquid fuel being vaporized. The passages must, however, be small but effective enough for the surface tension characteristics of the opposing surfaces 41 and 42 and the liquid fuel to spread the liquid fuel over the opposing surfaces 41 and 42. This passage space is thus so small that the fuel cannot form droplets of any significant size or bounce around, but they are squeezed into the space and the liquid is spread or smeared over the length of the opposing surfaces 41 and 42. At least one other criteria which should be realized as important is the length of the small but effective passages formed between the opposing surfaces 41 and 42 because depending on the type of liquid fuel and its characteristics such as surface tension, vapor pressure, boiling point, heat of vaporization, etc., the length should be such that the type of fuel would be completely vaporized before its exit from the passages between the opposing surfaces 41 and 42.

In FIGURE 6 which is an expanded diagrammatic view of one multiple chamber 27 with opposing faces 41 and 42 for forming passages therebetween, the supposed theory which allows the invention to function is diagrammatically presented. Also, FIGURE 6 has exhibited an additional material 40 which can be such materials as twisted or packed wire placed between the opposing surfaces 41 and 42 to form yet additional opposing surfaces. The creation of great opposing surface areas to interact with the surface tension of the liquid fuel is important because the more surface area over which the liquid fuel can have its surface tension affected, the greater the spreading effects, and the greater the heat transfer. In FIGURE 6, the opposing surfaces 41 and 42 have additional materials 40 placed between the opposing surfaces 41 and 42 of the multiple chamber 27 to create the increased surface area with opposing surfaces 41 and 42 and 40 in small but effective relationship. Thus, in FIGURE 6, the liquid fuel 43 is spread over the opposing surfaces 41 and 42 and also additional materials surfaces 40 until it is vaporized. Keeping the liquid fuel close to the surfaces while in liquid phase without agitation and without the liquid forming bubbles or droplets provides for maximum heat transfer. If bubbles or droplets form, then some gas phase comes between the liquid and the heated surface, with the loss of good heat transfer because the gas phase is less efficient than the liquid phase in heat transfer. Also, if the bubbles form in the gas phase, with the resulting poor heat transfer, the liquid will not completely vaporize and will be carried by the high velocity gas stream through and out of the vaporizer.

Thus, in this invention, when the liquid fuel is from the group of methanol, ethanol, propanol, isopropanol and butanol, the multiple chambers 27 have opposing surfaces 41 and 42 or 40 and 41 and additional material 40 are positioned such that the small but effective passages formed therebetween are from .0005 of an inch to .05 of an inch. The exact inside dimension of these multiple chambers 27 can vary depending on the surface tension between the particular material of the opposing surfaces 41 and 42 and additional material 40 and the liquid fuel.

The length of these passages formed between the opposing surfaces 41 and 42 and additional material 40 can vary, but the length must be sufficient for the surface tension between the liquid fuel and the opposing surfaces 41 and 42 and additional material 40 to keep the thin liquid relationship until the liquid fuel is vaporized. It should be understood that these conditions will vary depending on the heat of the boiler, atmospheric conditions, etc., but that an overall workable length can be established by allowing for the worst of conditions and designing the length accordingly.

Other embodiments of the liquid fuel vaporizer having opposing surfaces for forming small but effective passages are shown in FIGURES 2, 3 and 5. In FIGURE 5, the opposing surfaces 41 and 42 are formed by metal blocks 45 and 46 being drilled to form opposing surfaces 41 and 42. In this embodiment of FIGURE 5, the heat exchanger 28 is also formed by passages 47 being drilled or cut in the block 45 to form the passages 47 for delivery of the hot exhaust gases which provide the heat required to vaporize the liquid fuel. It can be understood that any formation of opposing surfaces 41 and 42 and passages 47 may be used as long as the two do not communicate in fluid relationship with each other. The first vaporizer manifold 26 in FIGURE 5 is shown in broken lines and would be positioned as shown. It should be noted that the liquid fuel is fed into the first vaporizer manifold 26 at the lowest point in the vaporizer manifold 26. This physical positioning of the liquid fuel inlet 25 at the lowest point allows for any excess in pressure which may build up to force the liquid fuel back against the fuel pump 11. Once the pressure exceeds the pressure of the fuel pump 11, all additional liquid would cease
to flow into the first vaporizer manifold 26.  Also, by
locating the liquid fuel inlet 25 at the bottom, no excess
liquid could get trapped at the bottom and fed into the
multiple chamber 27 even after the pressure may have
stopped the delivery of additional liquid fuel.

The heat necessary to vaporize the liquid fuel in
at least one embodiment as shown in FIGURE 2 is supplied
by the exhaust heat of the engine (not shown) being fed
back to the heat exchanger 28 which has a heat chamber
49.  The multiple chambers 27 are laid out through the
heat chamber 49 by at least one end 48 of heat exchanger
28 having apertures 44 through which are passed the
multiple chamber 27.  The fit between the apertures 44
and the multiple chamber 27 need not be a sealed fit,
but may be only a tight fit which becomes even tighter
when the one end 48 and the multiple chambers 27 are
heated and expand.  The heat is supplied by exhaust inlet
50 which causes the introduction of hot exhaust gases
to enter the heat chamber 49.  These gases are circulated
in the heat chamber 49 and exhausted from an exhaust
outlet 37.

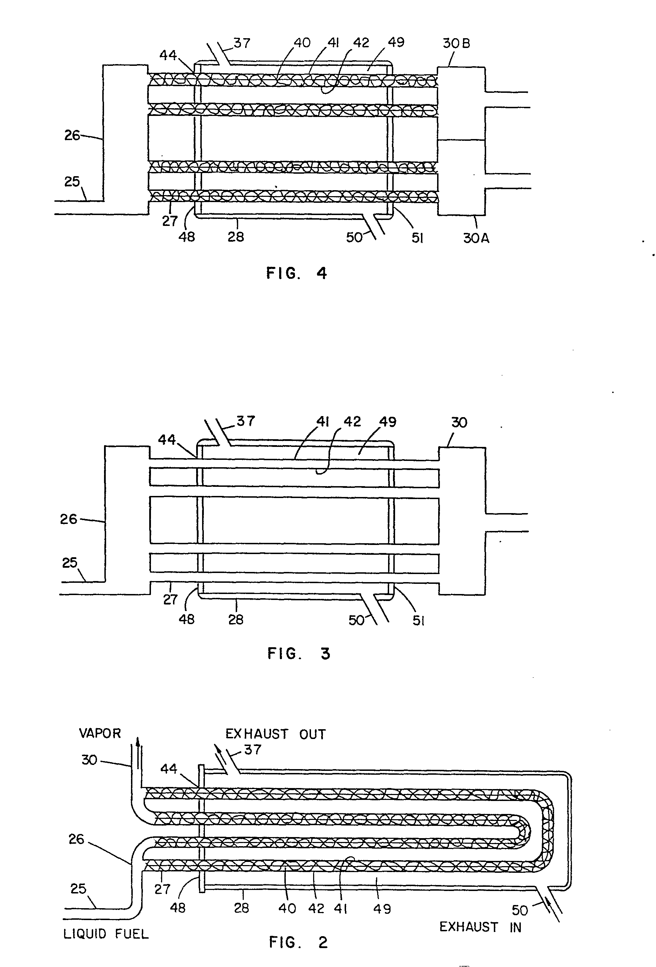

In FIGURE 3, however, a second end 51 is provided
which is similar to one end 48 of the heat chamber 49
and the fits and function of this second end 51 is
substantially the same as the one end 48.  The one end
48 or the second end 51 may be attached in any conventional manner to the heat chamber 49 for securely
holding the multiple chambers 27 in relatively fixed
and separate positions within the heat chamber 49.  The
one end 48 and the second end 51 also provide a rapid
means for removal of the multiple chambers 27 from the
heat chamber 49 should any problems develop in the
multiple chambers 27.

13                                      0056838

It should be understood that one advantage of having the first and second vaporizer manifold 26 and 30 outside of the heat chamber 49 is that the heat chamber 49 has corrosive gases therein and great thermal shocks from sudden introduction of hot gases therein, thus a significant improvement in the life expectancy of the liquid fuel vaporizer 10 occurs with this particular embodiment.

It will be understood that while specific forms of the invention have been described in order to make clear its general nature, the scope of the invention as set forth in the claims appendant hereto is not restricted to such specific forms, and in particular any other suitable form may be used in conformance with the claims to accomplish the objects of this invention.

CLAIMS

1. A vaporizer for vaporizing liquid fuels having improved heat transfer and controls for vaporization of liquid fuels in response to varying degrees of fuel vapor demands comprising:

a) a heat exchanger means formed from multiple chambers having opposing surfaces with small but effective passages formed therebetween and said opposing surfaces being in small but effective passage relationship of sufficient length for the surface tension between a liquid fuel and said opposing surfaces of said multiple chambers to spread the liquid fuel over said opposing surfaces of said multiple chambers for maintaining said liquid fuel in relatively constant and thin liquid relationship to said opposing surfaces of said multiple chambers of said heat exchanger until said liquid fuel is vaporized;

b) means for delivering liquid fuel to said heat exchanger means;

c) means for delivering heat to said heat exchanger means for vaporizing said liquid fuel therein;

d) means for controlling the flow of vaporized liquid fuel from said vaporizer means; and

e) means for controlling the flow of said liquid fuel to said heat exchanger means.

2. The vaporizer of Claim 1 wherein said heat exchanger means formed from said multiple chambers having opposing surfaces further comprises additional means placed between said opposing surfaces of said multiple chambers for forming multiple small but effective passages therebetween.

3.   The vaporizer of Claim 2 wherein said additional means placed between said opposing surfaces of said multiple chambers for forming additional multiple small but effective passages therebetween comprises wire means.

4.   The vaporizer of Claim 3 wherein said wire means is twisted to further increase the surface area for acting with the surface tension of said liquid fuel.

5.   The vaporizer of Claim 2 wherein said additional means placed between said opposing surfaces of said multiple chambers for forming additional multiple small but effective passages therebetween comprises particle means.

6.   The vaporizer of Claim 2 wherein said heat exchanger means formed from said multiple chambers having opposing surfaces with small but effective passages formed therebetween further comprises multiple chambers having passages of .0005 of an inch to .05 of an inch between said opposing surfaces and said passages being of sufficient length for the surface tension between a liquid fuel from the group methanol, ethanol, propanol, isopropanol and butanol and said opposing surfaces in said multiple chambers to keep said liquid fuel from said group in relatively constant and thin liquid relationship to said opposing surfaces of said multiple chambers of said heat exchanger until vaporized.

7.   The vaporizer of Claim 6 wherein said means for delivering liquid fuel to said heat exchanger means further comprising:

(Claim 7 Continued)

a) a fuel tank;

b) a fuel pump for pumping the liquid fuel from said fuel tank at a relatively constant pressure; and

c) a first vaporizer manifold means connected in fluid communication with said fuel pump and said vaporizer means for spreading pressure variation from said vaporizer evenly in said liquid fuel in said first vaporizer manifold prior to delivering said liquid.

8. The vaporizer of Claim 7 wherein said means for controlling the flow of said vaporized liquid fuel from said vaporizer means further comprising:

a second vaporizer manifold means connected in fluid communication with said vaporizer means having at least two chambers, a valve means connected in fluid communication with said chambers of said second vaporizer manifold means for selectively flowing one or both of said chambers in response to the vapor demand.

9. The vaporizer of Claim 6 further comprising a vapor regulator in fluid communication with said vaporizer having a first vapor chamber for receiving vaporized fuel and a second vapor chamber in fluid communication with said first vapor chamber and the discharge side of said vapor regulator.

10. The vaporizer of Claim 9 wherein said first vapor chamber has a valve for removal of liquid fuel which may collect and said valve is located at the lowest point in said first vapor chamber.

11.   The vaporizer of Claim 10 wherein said second
vapor chamber has a valve for removal of liquid fuel
which may collect and said valve is located at the
lowest point in said vapor chamber.

12.   The vaporizer of Claim 10 wherein said means
for delivering heat to said heat exchanger comprises
a heat chamber in fluid communication with said means
for delivering heat and substantially surrounding said
heat exchanger.

13.   The vaporizer of Claim 10 wherein said heat
chamber further comprises a tubular member for receiving
said heat exchanger means therein and at least one cover
means for receiving said heat exchanger means therethrough
in substantially close relationship to apertures formed
in the cover means and said cover means is fastened to
said tubular means.

FIG. 1

EXHAUST GAS
TO ATMOSPHERE

ENGINE
EXHAUST

FUEL
TANK

FUEL
PUMP

FIG. 4

FIG. 3

FIG. 2

FIG. 5

LIQUID FUEL

EXHAUST GAS

26 47 46 45 30A

13A

27

13B

25

41 42 30B

FIG. 6

MOLECULE
IN VAPOR

PACKER IN
BOILER

40    40    40

41                    42

27

43   43   43   43

LIQUID MOLECULE
IN BOILER

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,E | US-A-4 318 384 (MOFFETT) *Column 2, line 62 to column 3, line 22; column 5, line 20 to column 6, line 3* | 1,6 | F 02 M 31/18 |
| Y,D | US-A-3 990 432 (HAYNES) *Column 2, line 25 to column 3, line 24* | 1 | |
| A | FR-A-2 224 707 (SCHLADITZ) *Page 10, lines 1-12; page 10, line 20 to page 11, line 26* | 1,2,3, 12,13 | |
| A | GB-A- 203 387 (BISHOP) *Page 1, line 94 to page 2, line 68* | 1,2,3, 4,5 | |
| A | US-A-4 112 889 (HARPMANN) *Column 1, line 63 to column 2, line 55* | 1,9 | TECHNICAL FIELDS SEARCHED (Int. Cl. 3) F 02 M F 28 F F 23 K |
| A | FR-A-2 341 750 (FORD) *Page 1, lines 1-16; page 2, lines 3-29* | 1,10 | |
| A | GB-A-2 049 805 (GARDNER) *Page 2, lines 3-127* | 1,1,21 ,3 | |

The present search report has been drawn up for all claims

| Place of search | Date of completion of the search | Examiner |
|---|---|---|
| THE HAGUE | 26-04-1982 | TATUS W.D. |